# EUROPÄISCHE PATENTANMELDUNG

(11) **EP 2 006 613 A2**
(43) Veröffentlichungstag der Anmeldung: **24.12.2008**
(21) Anmeldenummer: 08006844.8
(22) Anmeldetag: 04.04.2008
(51) Int. Cl.: F24J 2/52

(54) **Befestigungseinrichtung für an einem Gestellaufbau anzuordnende Rahmenbauteile, insbesondere Solarmodule**

(30) Priorität: 16.04.2007 DE 102007018212
(71) Anmelder: Fath GmbH, 91174 Spalt (DE)
(72) Erfinder: Fath, Jan Mirko, 91166 Georgensgmünd (DE)
(74) Vertreter: Blaumeier, Jörg

(57) **Zusammenfassung**

Befestigungseinrichtung für an einem Gestellaufbau anzuordnende Rahmenbauteile, insbesondere Solarmodule, umfassend eine erste und eine zweite, voneinander beabstandet und parallel am Gestellaufbau anzuordnende Profilschiene, an denen ein Rahmenbauteil im Bereich seines Rahmenrandes festlegbar ist, mit einem Halteblech (10) mit einem ersten Befestigungsabschnitt (13) zum Befestigen an der ersten Profilschiene (8) und einem zweiten Befestigungsabschnitt (11) mit zwei zu beiden Seiten des Halteblechs vorspringenden Halteteilen, die in der Montagestellung die Rahmen zweier nebeneinander festzulegender, mit der gegenüberliegenden Seite an einer der Profilschienen aufgelagerten Rahmenbauteile (3) übergreifen.

## Beschreibung

Die Erfindung betrifft eine Befestigungseinrichtung für an einem Gestellaufbau anzuordnende Rahmenbauteile, insbesondere Solarmodule, umfassend eine erste und eine zweite, voneinander beabstandet und parallel am Gestellaufbau anzuordnende Profilschiene, an denen ein Rahmenbauteil im Bereich seines Rahmenrandes festlegbar ist.

Großflächige Rahmenbauteile wie beispielsweise Solarmodule oder Sonnenkollektoren etc. werden üblicherweise im Freien, sei es freistehend oder auf Hausdächern, auf einem Gestellaufbau angeordnet. Der Gestellaufbau ist üblicherweise im Boden oder am Dach selbst verankert und besteht beispielsweise aus entsprechenden Seitenführungen, gebildet aus geeigneten Profilschienen, an denen über eine geeignete Befestigungseinrichtung die Rahmenbauteile fixiert werden. Eine solche Befestigungseinrichtung umfasst üblicherweise zwei parallel und beabstandet zueinander am Gestellaufbau anzuordnende Profilschienen, die sich zwischen den Gestellaufbauabschnitten erstrecken. An diesen Profilschienen werden die Rahmenbauteile randseitig über Befestigungsmittel fixiert. Hierzu kommen üblicherweise Schraubbefestigungen zum Einsatz, also geeignete Halterungen, die an der jeweiligen Profilschiene festgeschraubt und in geeigneter Weise, häufig auch über Schraubverbindungen, fixiert werden. Das heißt, jedes einzelne Rahmenbauteil wird einzeln befestigt bzw. verschraubt, was während der Montage sehr aufwendig ist, als auch im Rahmen der Demontage, beispielsweise wenn ein Rahmenbauteil, zum Beispiel ein Solarmodul, wegen Defekts auszutauschen ist. Nachdem üblicherweise mehrere solcher Solarmodule nebeneinander in einer Reihe angeordnet sind, ist es mitunter erforderlich, sämtliche benachbarten Solarmodule zu lösen, um an das defekte Modul heranzukommen, oder aber die Solarmodule derart weit voneinander zu beabstanden, dass die Befestigungsmittel des defekten Solarmoduls gelöst werden können.

Der Erfindung liegt damit das Problem zugrunde, eine Befestigungseinrichtung anzugeben, die im Aufbau und in der Handhabung einfach ist und damit eine einfache Montage ermöglicht, und die auch eine einfache Demontage zulässt.

Zur Lösung dieses Problems ist bei einer Befestigungseinrichtung der eingangs genannten Art ein Halteblech vorgesehen, mit einem ersten Befestigungsabschnitt zum Befestigen an der ersten Profilschiene und einen zweiten Befestigungsabschnitt mit zwei zu beiden Seiten des Halteblechs vorspringenden Halteelteilen, die in der Montagestellung die Rahmen zweier nebeneinander festzulegender, mit der gegenüberliegenden Seite an einer der Profilschienen aufgelagerten Rahmenbauteile übergreifen.

Unter Verwendung der erfindungsgemäßen Befestigungseinrichtung - die selbstverständlich zum Befestigen mehrerer Rahmenbauteile entsprechend viele Haltebleche umfasst - ist es vorteilhaft nicht mehr erforderlich, die einzelnen Rahmenbauteile über eine Schraubverbindung zu fixieren, vielmehr erfolgt die Verbindung der Rahmenbauteile mit der Profilschiene über ein sehr einfach ausgestaltetes, sehr dünnes Halteblech, das in der Montagestellung lediglich die Rahmen zweier nebeneinander anzuordnender Rahmenbauteilen übergreift. Diese Rahmen sind weder speziell auszubilden, noch sind besondere Halteeinrichtungen für das Halteblech vorzusehen, vielmehr werden die Rahmen einfach unterseitig durch die Auflage an einem Profilstab und oberseitig durch die sie übergreifenden Halteabschnitte fest und sicher gehaltert. Hierzu weist das Halteblech die beiden Übergriff-Halteteile auf. Zur Montage wird, nachdem ein erstes Rahmenbauteil auf die Profilschienen aufgesetzt wurde, das Halteblech mit seinem ersten Befestigungsabschnitt an der Profilschiene festgelegt und so bezüglich des Rahmenbauteils positioniert, dass es dieses mit seinem Halteteil übergreift. Anschließend wird lediglich das zweite Rahmenbauteil aufgesetzt und an das erste herangeschoben, wobei automatisch das andere Übergriff-Halteteil über den Rahmen dieses zweiten Rahmenbauteils übergreift. Es ist also möglich, unter Verwendung der erfindungsgemäß vorgesehenen Haltebleche eine beliebige Anzahl an Rahmenbauteilen auf einfachste Weise nebeneinander anzuordnen.

Das Halteblech ist vorzugsweise T-förmig und weist einen Längsschenkel und einen an diesem angeordneten, die beiden Haltelteile bildenden flächigen Querschenkels auf. Es ist also insgesamt sehr flach, so dass die Rahmenbauteils sehr nah aneinander angeordnet werden können. Über den Querschenkel kann eine große Auflagefläche am jeweiligen Rahmen realisiert werden, was für eine sehr stabile, hohe Kräfte aufnehmende Befestigung bzw. Gegenlagerung des Rahmens vorteilhaft ist. Ferner kann beidseits im Übergang vom Längsschenkel zum Querschenkel eine ebene oder gebogene Anlauffläche, die in der Montagestellung an dem jeweiligen Rahmen anliegt, vorgesehen sein, über die beim Aneinanderschieben beider Rahmenbauteile die Rahmen fest gegen die sie auflagernde Profilschiene gedrückt werden.

Das Halteblech selbst ist an der ersten Profilschiene festgelegt, wobei dies bevorzugt so erfolgt, dass es auch in der Befestigungsstellung noch längsverschieblich an der Profilschiene angeordnet ist. Dies kann beispielsweise dadurch erreicht werden, dass die erste Profilschiene eine hinterschnittene Nut und der Befestigungsabschnitt einen Hakenabschnitt aufweist, über den er in der hinterschnittenen Nut in der Befestigungsstellung arretierbar ist, so dass er aus der Nut nicht mehr herausgezogen werden kann, gleichwohl er aber noch längsverschieblich ist. Dies ermöglicht es, zum Anordnen eines Halteblechs dieses in verkippter oder verdrehter Stellung mit dem Hakenabschnitt in die hinterschnittene Nut einzuführen, das Halteblech zu verschwenken oder zu verdrehen, so dass der Hakenabschnitt die Hinterschneidung hintergreift und dann direkt an das Rahmenbauteil zu schieben und dort über den übergreifenden Halteteile bzw. den flächigen Querschenkelabschnitt festzulegen. Dabei ist die Nut bevorzugt als doppelt hinterschnittene T-Nut und der Hakenabschnitt der Nutform entsprechend T-förmig ausgebildet. Anstelle einer hinterschnittenen Nut kann die Profilschiene auch als einfache Blechschiene, die aus einem z. B. zur C-Form abgekantetem Blech gebildet ist, ausgeführt sein. An dieser Blech-Profilschiene sind nach einer Alternativausführung mehrere Langlöcher vorzugsweise in einem definierten Abstandsmaß vorgesehen. In einem solchen Langloch kann nun der Hakenabschnitt eingesteckt und durch Verdrehen gehaltert werden. Diese Profilschiene ist im Vergleich zu den üblichen Alu-Profilschienen sehr einfach ausgestaltet, kann aber gleichwohl zur Halterung der Module über die Hakenabschnitte und die Langlöcher verwendet werden, wie sie auch ohne weiteres am Gestellaufbau befestigt werden kann.

Eine alternative Befestigungsmöglichkeit für das Halteblech sieht vor, den ersten Befestigungsabschnitt abzuwinkeln und eine Durchbrechung zur Aufnahme einer Befestigungsschraube, über die er an der ersten Profilschiene in einer hinterschnittenen, insbesondere T-förmigen Nut mittels eines Nutensteins oder einer Hammerkopf-Befestigungsschraube festlegbar ist, vorzusehen. Auch hier kann eine geeignete Festlegung des Haltebleches bei gleichzeitig gegebener Verschiebbarkeit erreicht werden.

Das Halteblech ist relativ dünn, bevorzugt weist es eine Blechstärke von 0,5 - 8 mm, insbesondere von ca. 3 - 5 mm auf. Dies ermöglicht es, die Rahmenbauteile sehr nahe aneinander bzw. bei Versenkung des Halteblechs in entsprechenden flachen seitlichen Ausnehmungen am Rahmen direkt aneinander zu setzen, nachdem letztlich lediglich die Blechstärke die Rahmenbauteile beabstandet. Dies ermöglicht es, den gegebenen Bauraum optimal auszunutzen. Eine derart enge Aneinanderordnung ist problemlos möglich, da im Falle einer Demontage eines beidseits von anderen Rahmenbauteilen umschlossenen Rahmenbauteil lediglich an einer Seite die Rahmenbauteile etwas zur Seite geschoben werden müssen, was ohne weiteres möglich ist, da die Haltebleche längsverschiebbar an der ersten Profilschiene geführt sind, so dass das dann freiliegende auszutauschende Rahmenbauteil ohne weiteres entnommen werden kann.

Wenngleich es grundsätzlich denkbar ist, ein Rahmenbauteil an beiden Rahmenseiten unter Verwendung des Halteblechs zu fixieren, ist es zweckmäßig, wenn die zweite Profilschiene eine entsprechend der Rahmenhöhe dimensionierte Einstecknut für den Rahmen aufweist. Das Rahmenbauteil ist also bei der Montage mit seiner einen Rahmenseite zunächst in die Einstecknut einzuschieben, wonach es mit der anderen Rahmenseite auf die untere Profilschiene, wo ein entsprechender Anschlag, der ein Herabrutschen bei schräg stehendem Rahmenbauteil verhindert, vorgesehen ist, aufgelegt wird. Sodann ist lediglich noch ein Halteblech anzuordnen, sei es durch gekipptes Einstecken des Hakenabschnitts in die Nut und anschließendes Verdrehen und Fixieren am Rahmenbauteil, sei es durch Verbinden mit einem Nutenstein oder einer Hammerkopfschraube etc. und anschließendes Fixieren am Rahmenbauteil über den Übergriff des Halteelements vorzugsweise in Form des flächigen Querschenkelabschnitts.

Besonders zweckmäßig ist es, wenn die beiden Profilschienen gleich ausgeführt sind, und jeweils eine hinterschnittene Nut an einer Schienenseite sowie die Einstecknut an der gegenüberliegenden Schienenseite aufweisen. Das heißt, es können identische Profilschienen zur Bildung der ersten und zweiten Profilschiene verwendet werden.

Natürlich erfordert der Umstand, dass die Haltebleche längsverschiebbar sind, eine Fixierung der beiden randseitigen Rahmenbauteile an der ersten und gegebenenfalls auch an der zweiten Profilschiene, um zu vermeiden, dass der gesamte Bauteilverbund letztlich längsverschiebbar an den Profilschienen ist. Auch dies kann sehr einfach erfolgen, indem die Befestigungsvorrichtung ferner ein Halteelement umfassend ein seitlich vorspringendes, den Rahmen eines benachbarten Rahmenbauteils übergreifendes Halteelement, insbesondere in Form eines flächigen Übergriffs, sowie einen Befestigungsabschnitt, insbesondere umfassend eine Durchbrechung zur Aufnahme einer Befestigungsschraube zum Befestigen an der ersten Profilschiene, gegebenenfalls auch an der zweiten Profilschiene, für eine Festlegung eines äußeren Rahmensbauteils einer Reihe nebeneinander anzuordnender Rahmenbauteile aufweist. Dieses Haltelement wird in gleicher Weise durch einfaches Übergreifen des Übergriffs, der auch hier vorzugsweise flächig ist, über den Rahmenrand des benachbarten Rahmenbauteils positioniert, jedoch erfolgt dann eine feste, also unverschiebbare Verbindung des Halteelements mit der jeweiligen Profilschiene. Das heißt, die feste Fixierung des Rahmenbauteilverbundes erfolgt ausschließlich über die Befestigung im Bereich der äußeren Rahmenkanten der beiden äußersten Rahmenbauteile, wo auch eine Diebstahlsicherung in geeigneter Weise vorzusehen ist.

Um dieses Halteelement zu befestigen, kann an der Profilschiene zweckmäßigerweise eine weitere hinterschnittene Nut, insbesondere eine T-Nut vorgesehen sein, die unter einem Winkel von 90° zur ersten hinterschnittenen Nut verläuft und in der das Halteelement mittels eines Nutensteins oder einer Befestigungsschraube, insbesondere einer Hammerkopf-Befestigungsschraube festlegbar ist. Hier erfolgt also die Fixierung des Halteelements quasi von oben an der Profilschiene, während die Fixierung der Haltebleche seitlich erfolgt. Wird auch das Halteblech von oben in eine Nut eingesetzt, können Halteblech und Halteelement in derselben Nut fixiert werden. Bei Verwendung einer einfachen C-förmigen Blech-Profilschiene können entsprechend den ersten Langlöchern weitere Langlöcher an einer abgekanteten Schienenseite zur Aufnahme einer Befestigungsschraube zur Fixierung- des Halteelements vorgesehen sein. Die ersten Langlöcher wären z. B. an der vertikalen Seite, die weiteren an der abgekanteten Oberseite vorgesehen.

Neben der Befestigungsvorrichtung selbst betrifft die Erfindung ferner eine Profilschiene für eine Befestigungseinrichtung der beschriebenen Art, die sich dadurch auszeichnet, dass an einer Schienenseite eine hinterschnittene T-Nut und an der gegenüberliegenden Schienenseite eine U-förmige Einstecknut vorgesehen ist. Weiterhin kann eine weitere hinterschnittene T-Nut vorgesehen sein, die unter einem Winkel von 90° zur ersten hinterschnittenen Nut verläuft. Schließlich weist die erfindungsgemäße Profilschiene einen in Schienlängsrichtung durchlaufenden vorspringenden Anschlagsteg auf.

Schließlich betrifft die Erfindung eine Rahmenbauteilgruppe, insbesondere Solarmodulgruppe, die auf einem Gestellaufbau angeordnet ist, bei welcher mehrere nebeneinander angeordnete Rahmenbauteile unter Verwendung einer Befestigungseinrichtung in beschriebener Art zu einem Verbund zusammengesetzt sind.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines Rahmenbauteitverbundes, hier mehrerer Solarzellenmodule, in einer Anordnung an einem dachseitigen Gestellaufbau,
- Fig. 2a und 2b: zwei Seitenansichten eines Halteblechs,
- Fig. 3: einen Querschnitt durch eine Profilschiene,
- Fig. 4: eine Darstellung der Befestigung eines Rahmenbauteils unter Verwendung einer erfindungsgemäßen Befestigungseinrichtung,
- Fig. 5: eine Aufsicht auf die Befestigung zweier aneinander angrenzender Rahmenbauteile, und
- Fig. 6.: eine Darstellung der randseitigen Fixierung des Rahmenbauteilverbundes.

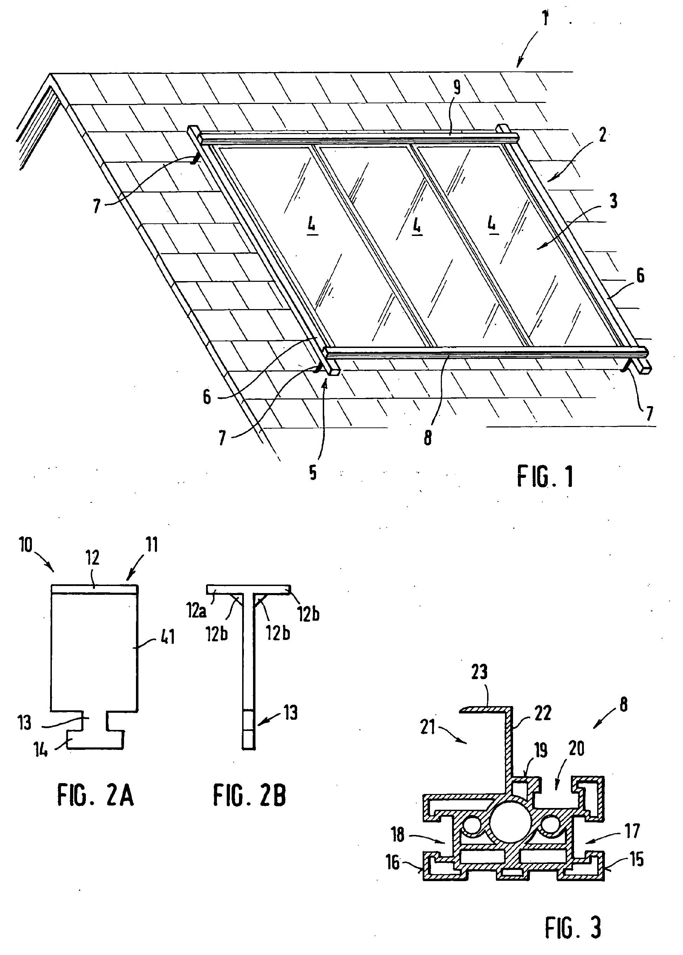

Fig. 1 zeigt in Form einer Prinzipdarstellung eine an einem Hausdach 1 angeordnete Rahmenbauteilgruppe 2, hier umfassend lediglich exemplarisch drei Rahmenbauteile 3, z.B. in Form von Solarzellenmodulen 4. Zur Halterung der Solarzellenmodule 4 ist ein Gestellaufbau 5 vorgesehen, umfassend zwei hier vertikal verlaufende Profilschienen 6, die über entsprechende Dachhalterungen 7 dachseitig fixiert sind. Über nicht näher gezeigte Halte-Befestigungsmittel sind zwei Profilschienen 8, 9 an den Schienen 6 des Gestellaufbaus 5 angeordnet. Die beiden Profilschienen 8, 9 verlaufen beabstandet und parallel zueinander und queren die Schienen 6 horizontal. Sie sind Teil einer Befestigungseinrichtung für die Solarzellenmodule 4, worauf nachfolgend noch eingegangen wird, die wiederum über geeignete Haltebleche und Halteelemente an den Profilschienen 8, 9 befestigt sind. An dieser Stelle ist darauf hinzuweisen, dass selbstverständlich auch weit mehr als drei Solarzellenmodule nebeneinander angeordnet werden können, wie auch eine weitere Reihe oberhalb oder unterhalb davon vorgesehen sein kann, je nach Größe der belegbaren Fläche.

Fig. 2a und 2b zeigen zwei Seitenansicht eines querschnittlich T-förmigen Halteblechs 10, das ebenfalls Teil der erfindungsgemäßen Befestigungseinrichtung ist.

Das Halteblech 10 weist einen ersten Befestigungsabschnitt 13 auf, an dem im gezeigten Ausführungsbeispiel ein T-förmiger Hakenabschnitt 14 ausgebildet ist. Über diesen Hakenabschnitt 14 wird das Halteblech 10 im ersten Profilstab 8 befestigt, worauf nachfolgend noch eingegangen wird.

Ferner weist das Halteblech 10 einen zweiten Befestigungsabschnitt 11 auf, über den es am Rahmen eines Rahmenbauteils 3 befestigt wird. Hierzu ist am ersten Befestigungsabschnitt 11 im gezeigten Ausführungsbeispiel ein Querschenkel 12 vorgesehen, der sich zu beiden Seiten des Längsschenkels 41 erstreckt und so zwei beidseits vorspringende Halteteile 12a bildet, die in der Montagestellung die Rahmen zweier benachbarter Rahmenbauteile übergreifen, worauf nachfolgend noch eingegangen wird.

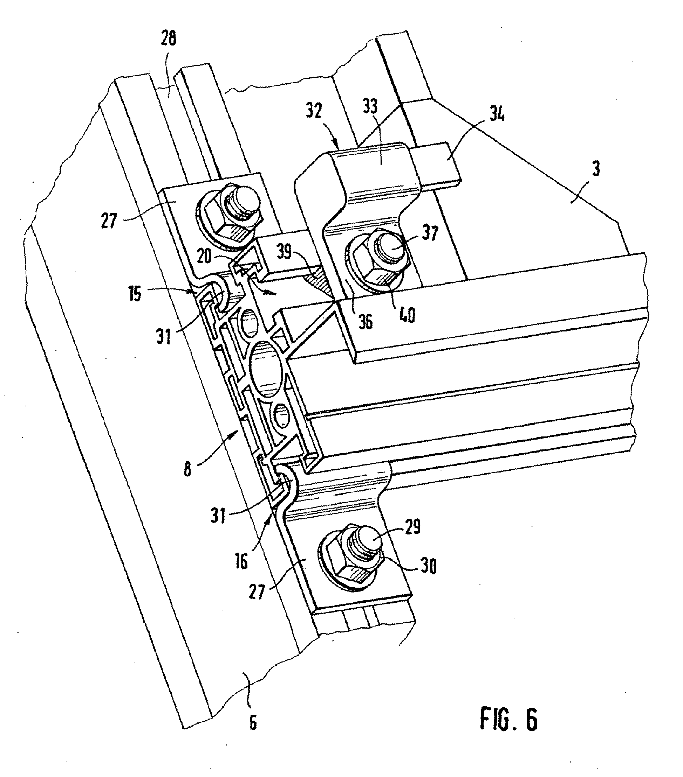

Fig. 3 zeigt eine Querschnittansicht durch beispielsweise den Profilstab 8, wobei festzuhalten ist, dass der Profilstab 9 identisch ausgeführt ist. Der Profilstab 8 weist zunächst zwei zu den beiden Seiten 15, 16 hin offene hinterschnittene T-Nuten 17, 18 auf, die zum einen beide zur Aufnahme geeigneter Befestigungsmittel dienen, über welche die jeweilige Profilschiene 8, 9 mit den Schienen 6 des Gestellaufbaus zu verbinden ist, worauf bezüglich Fig. 6 noch näher eingegangen wird.

An der Oberseite 19 der Profilschiene 8 ist eine weitere hinterschnittene T-Nut 20 vorgesehen, die zur Fixierung des Halteblechs 10 über den T-förmigen Hakenabschnitt 14, der in der Montagestellung in der T-Nut 20 aufgenommen ist, dient, wobei die Bemaßung jedoch derart ist, dass das Halteblech 10 auch bei Eingriff des Hakenabschnitts 14 in der T-Nut 20 längsverschieblich in der Nut geführt ist. Die Nut 20 dient ferner der Befestigung seitlicher Halteelemente, über die die beiden äußeren Rahmenbauteile 3 fest mit der jeweiligen Profilschiene 8, 9 verbunden werden, wobei diese Haltelemente, worauf nachfolgend bezüglich Fig. 6 noch näher eingegangen wird, unverschieblich fixiert werden, so dass der gesamte Rahmenbauteilverbund fest verankert ist. Grundsätzlich wäre es auch denkbar, in dieser seitliche Nut 17 den Hakenabschnitt 14 des Halteblechs 10 einzudrehen, das dann etwas anders ausgeführt ist und der Hakenabschnitt 14 abgewinkelt angeordnet ist.

Weiterhin ist eine zur Schienenseite 16 hin offene Einstecknut 21 vorgesehen, die gleichzeitig mit ihrem vertikalen Schenkel 22 einen Anschlag für ein Rahmenbauteil bildet. In die Einstecknut 21 wird das eine Rahmenende eingesteckt, also über diese Einstecknut 21 beispielsweise an der zweiten Profilschiene 9 fixiert, wobei der Horizontalsteg 23 den Bauteilrahmenrand übergreift. Das andere Ende liegt auf der ersten Profilschiene 8 auf und überdeckt dort die weitere T-Nut 20, liegt dort also auf der Oberseite auf und an der Vertikalwand 22 an.

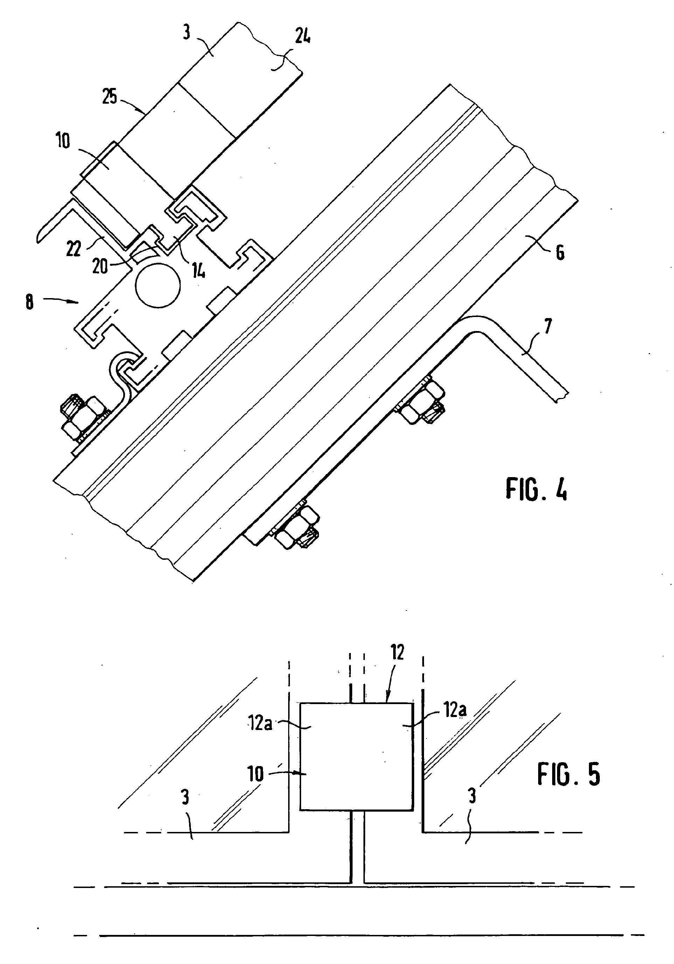

Fig. 4 zeigt eine Prinzipdarstellung der Montagesituation. Gezeigt ist die in Fig. 1 vertikal verlaufende Seite 24 eines Rahmenbauteils 3, wobei der untere Rand 25 des Rahmenbauteils 3 auf der ersten Profilschiene 8 aufliegt und gegen die Vertikalwand 22 anliegt. Die erste Profilschiene 8 ist wie bereits beschrieben mit der Schiene 6 des Gestellaufbaus verbunden. Zur Verbindung des Rahmenbauteils 3 mit der ersten Profilschiene 8 kommt nun ein Halteblech 10 zum Einsatz. Dieses wird zunächst um beispielsweise 90° aus der in Fig. 4 gezeigten Montagestellung gedreht, so dass der Hakenabschnitt 14 in die hinterschnitte T-Nut 20 eingesetzt werden kann, wonach das Halteblech 10 wieder um 90° verdreht wird, so dass der Hakenabschnitt 14 die Nuthinterschneidung hintergreift und nicht mehr aus der Nut herausgezogen werden kann. Sodann wird das Halteblech 10 direkt an die Rahmenseite 24 herangeschoben. Das flächige Halteteil 12a des Querschenkels 12 liegt in dieser Position oberhalb des Rahmens des Rahmenbauteils 3, übergreift diesen also flächig und drückt ihn gegen die Profilschiene 8. Das andere Ende des Querschenkels 12, also das andere Halteteil 12a ragt zur noch offenen Seite hervor. Im nächsten Montageschritt wird nun das nächstfolgende Rahmenbauteil 3 montiert, indem es zunächst mit seinem freien oberen Rand in die Einstecknut 21 der ersten Profilschiene 9 eingesteckt wird, sodann mit dem untere Rand auf die untere erste Profilschiene 8 aufgelegt wird und bis an das Halteblech 10 herangeschoben wird, wobei das freie Halteteil 12a des Querschenkels 12 automatisch den Rahmen des Rahmenbauteils 3 übergreift. Ersichtlich kann also der Rahmenbauteilverbund auf äußerst einfache Weise hergestellt werden. Denn es ist lediglich erforderlich, die jeweiligen Rahmenbauteile mit ihrem oberen Rahmenende in die Einstecknut der zweiten Profilschiene 9 einzusetzen mit dem unteren Ende auf die erste Profilschiene 8 aufzulegen, sodann lediglich das Halteblech einzustecken und einzudrehen und über das eine Halteteil 12a zu fixieren, wonach bereits das nächste Rahmenbauteil in entsprechend einfacher Weise lediglich herangeschoben werden muss. Um die Rahmenbauteile fest gegen die Profilschienen 8 zu drücken bzw. gegenzulagern, weist ein Halteblech 10 vorzugsweise im Übergang zwischen dem Querschenkel 12 zum Längsschenkel 41 beidseits schräge Anlaufflächen 12b auf, die auf die Rahmenkante drücken.

Fig. 6 zeigt die Ansicht des unteren linken Bereichs der Rahmenbauteilgruppe 2 aus Fig. 1 und stellt die dortige Fixierung des äußeren linken Rahmenbauteils 3 dar, wobei diese Art der Fixierung in gleicher Weise an der rechten Seite des äußeren rechten Rahmenbauteils 3 vorgesehen ist, wie gegebenenfalls auch an den oberen Enden im Bereich der Profilschiene 9.

Gezeigt ist zunächst die Befestigung der ersten Profilschiene 8 an hier der linken Schiene 6 des Gestellaufbaus 5. Gezeigt sind zwei Halteklammern 27, die über geeignete, in einer hinterschnittenen T-Nut 28 geführte Hammerkopfschrauben 29 und Haltemuttern 30 dort verschraubt sind und mit ihrem freien Klammerabschnitt 31 in die jeweilige T-Nut 17 beziehungsweise 18 eingreifen. Auf diese Weise ist jede der Profilschienen 8, 9 beidseitig mit der jeweiligen Schiene 6 verbunden.

Das Rahmenbauteil 3 wiederum ist über ein Halteelement 32 fest mit der ersten Profilschiene 8 verbunden. Das Halteelement 32 weist einen ersten Befestigungsabschnitt 33 auf, an dem ein angeformtes oder befestigtes, seitlich vorspringendes Halteteil 34 vorgesehen ist, das in der Montagestellung ebenfalls den Rahmen des benachbarten Rahmenbauteils 3, diesen fixierend, übergreift. Auch hier erfolgt also eine einfache Übergriff-Verbindung zwischen Haltelement 32 und Rahmenbauteil 3, ohne dass das Rahmenbauteil besonders ausgebildet oder besondere Halterungen für das Halteteil etc. vorgesehen sein müssten. Vielmehr können einfach ausgestaltete Kantenprofile zur Bildung des Rahmens verwendet werden. Vorgesehen ist ferner ein zweiter Befestigungsabschnitt 36, der im gezeigten Beispiel eine Durchsteckdurchbrechung aufweist, durch die der Gewindeschaft 37 einer Halteschraube, auch hier einer Hammerkopfschraube 39 greift, die mit ihrem Kopf in der oberen weiteren T-Nut 20 aufgenommen ist. Über eine Haltemutter 40 wird eine feste Verbindung und damit Festlegung des Haltelements 32 erwirkt. Nachdem eine solche Befestigung an den beiden äußeren Rahmenbauteilen 3 an der ersten Profilschiene 8 und bevorzugt auch an der zweiten Profilschiene 9 erfolgt, kann auf diese einfache Weise der gesamte Bauteilverbund sicher fixiert werden, wobei die einzelnen Rahmenbauteile untereinander lediglich über die einzelnen dünnen Haltebleche 10 und über die realisierten Steckverbindungen fixiert sind.

Gleichermaßen wie die Montage ist auch die Demontage im Wartungs- oder Austauschfall einfach. Es ist lediglich erforderlich, an einer Seite das oder die Halteelemente 32 an der Profilschiene 8 und gegebenenfalls 9 zu entfernen. Zusammen können alle Rahmenbauteile 3, da eben nur durch einfache Übergriff-Verbindungen mit den längsverschieblichen Halteblechen 10 verbunden, seitlich verschoben werden, so dass das jenige Rahmenbauteil 3, das aus dem Verbund zu entnehmen und auszutauschen ist, ohne weiteres freigelegt und entnommen werden kann und ein neue eingesetzt werden kann. Ersichtlich können die Rahmenbauteile 3 auch extrem eng aneinandergesetzt werden, nachdem das einzig abstandsbestimmende Element das Halteblech 10 ist, das bevorzugt sehr schmal, beispielsweise mit einer Blechstärke von ca. 1 mm, zu dimensionieren ist.

## Patentansprüche

1. Befestigungseinrichtung für an einem Gestellaufbau anzuordnende Rahmenbauteile, insbesondere Solarmodule, umfassend eine erste und eine zweite, voneinander beabstandet und parallel am Gestellaufbau anzuordnende Profilschiene, an denen ein Rahmenbauteil im Bereich seines Rahmenrandes festlegbar ist, **gekennzeichnet durch** ein Halteblech (10) mit einem ersten Befestigungsabschnitt (13) zum Befestigen an der ersten Profilschiene (8) und einem zweiten Befestigungsabschnitt (11) mit zwei zu beiden Seiten des Halteblechs vorspringenden Halteteilen, die in der Montagestellung die Rahmen zweier nebeneinander festzulegender, mit der gegenüberliegenden Seite an einer der Profilschienen aufgelagerten Rahmenbauteile (3) übergreifen.

2. Befestigungseinrichtung nach Anspruch 1, **dadurch gekennzeichnet, dass** das Halteblech (10) T-förmig ist und einen Längsschenkel (41) und einen an diesem angeordneten, die beiden Halteteile (12a) bildenden flächigen Querschenkels (12) aufweist.

3. Befestigungseinrichtung nach Anspruch 2, **dadurch gekennzeichnet, dass** beidseits im Übergang vom Längsschenkel (41) zum Querschenkel (12) eine ebene oder gebogene Anlauffläche (12b), die in der Montagestellung an dem jeweiligen Rahmen anliegt, vorgesehen ist.

4. Befestigungseinrichtung nach einem der vorangehenden Ansprüche, **dadurch gekennzeichnet, dass** das Halteblech (10) eine Stärke von 0,5 - 8 mm, insbesondere von 3 - 5 mm aufweist.

5. Befestigungseinrichtung nach einem der vorangehenden Ansprüche, **dadurch gekennzeichnet, dass** die erste Profilschiene (8) eine hinterschnittene Nut (17) oder ein Langloch und der erste Befestigungsabschnitt (13) einen Hakenabschnitt (14) aufweist, über den er in der hinterschnittenen Nut (17) oder dem Langloch in der Befestigungsstellung arretierbar ist.

6. Befestigungseinrichtung nach Anspruch 5, **dadurch gekennzeichnet, dass** die Nut als doppelt hinterschnittene T-Nut (17) und der Hakenabschnitt (14) der Nutform entsprechend T-förmig ausgebildet ist.

7. Befestigungseinrichtung nach einem der Ansprüche 1 bis 4, **dadurch gekennzeichnet, dass** der erste Befestigungsabschnitt abgewinkelt ist und eine Durchbrechung zur Aufnahme einer Befestigungsschraube, über die er an der ersten Profilschiene (8) in einer hinterschnittenen, insbesondere T-förmigen Nut mittels eines Nutensteins oder einer Hammerkopf-Befestigungsschraube, festlegbar ist, aufweist.

8. Befestigungseinrichtung nach einem der vorangehenden Ansprüche, **dadurch gekennzeichnet, dass** die zweite Profilschiene (9) eine entsprechend der Rahmenhöhe dimensionierte Einstecknut (21) für den Rahmen eines Rahmenbauteils (3) aufweist.

9. Befestigungseinrichtung nach Anspruch 8, **dadurch gekennzeichnet, dass** die beiden Profilschienen (8, 9) gleich ausgeführt sind, und jeweils eine hinterschnittene Nut (17) an einer Schienenseite (15) sowie die Einstecknut (21) an der gegenüberliegenden Schienenseite (16) aufweisen.

10. Befestigungseinrichtung nach einem der vorangehenden Ansprüche, **dadurch gekennzeichnet, dass** sie ferner ein Halteelement (32) umfassend ein seitlich vorspringendes, den Rahmen eines benachbarten Rahmenbauteils übergreifendes Halteteil, insbesondere in Form eines flächigen Übergriffs, sowie einen Befestigungsabschnitt (36), insbesondere umfassend eine Durchbrechung zur Aufnahme einer Befestigungsschraube (39) zum Befestigen an einer Profilschiene (8, 9) für eine Festlegung eines äußeren Rahmenbauteils (3) einer Reihe nebeneinander anzuordnender Rahmenbauteile.

11. Befestigungseinrichtung nach Anspruch 10, **dadurch gekennzeichnet, dass** an der Profilschiene (8, 9) eine weitere hinterschnittene Nut (20), insbesondere eine T-Nut vorgesehen ist, oder ein weiteres Langloch, die oder das unter einem Winkel von 90° zur ersten hinterschnittenen Nut (17) oder zum ersten Langloch verläuft und in der das Halteelement (32) mittels eines Nutensteins oder einer Befestigungsschraube, insbesondere einer Hammerkopf-Befestigungsschraube festlegbar ist.

12. Profilschiene für eine Befestigungseinrichtung nach einem der vorangehenden Ansprüche, **dadurch gekennzeichnet, dass** an einer Schienenseite (15) eine hinterschnittene T-Nut (17) und an der gegenüberliegenden Schienenseite (16) eine U-förmige Einstecknut (21) vorgesehen ist.

13. Profilschiene nach Anspruch 12, **dadurch gekennzeichnet, dass** eine weitere hinterschnittene T-Nut (20) vorgesehen ist, die unter einem Winkel von 90° zur ersten hinterschnittenen Nut (17) verläuft.

14. Profilschiene nach Anspruch 12 oder 13, **dadurch gekennzeichnet, dass** ein in Schienenlängsrichtung durchlaufender vorspringender Anschlagsteg (22) vorgesehen ist.

15. Rahmenbauteilgruppe (2), insbesondere Solarmodulgruppe, die auf einem Gestellaufbau (5) angeordnet ist, bei welcher mehrere nebeneinander angeordnete Rahmenbauteile (3) unter Verwendung einer Befestigungseinrichtung nach einem der Ansprüche 1 bis 11 zu einem Verbund zusammengesetzt sind.

16. Rahmenbauteilgruppe nach Anspruch 15, **dadurch gekennzeichnet, dass** lediglich an den äußeren Rahmenbauteilen eine Diebstahlsicherungsvorrichtung vorgesehen ist.
